# EUROPÄISCHE PATENTANMELDUNG

(11) **EP 3 075 566 A1**
(43) Veröffentlichungstag der Anmeldung: **05.10.2016**
(21) Anmeldenummer: 15162428.5
(22) Anmeldetag: 02.04.2015
(51) Int. Cl.: B60B 17/00

(54) **ELASTISCHES RAD FÜR EIN SCHIENENFAHRZEUG**

(71) Anmelder: Gutehoffnungshütte Radsatz GmbH, 46145 Oberhausen (DE)
(72) Erfinder: Kasprzyk, Thaddäus, 46284 Dorsten (DE); Hoog, Thomas, 45144 Essen (DE); Kemp-Lettkamp, Christian, 46487 Wesel (DE); Gerlach, Thomas, 47506 Neukirchen-Vluyn (DE)
(74) Vertreter: Patent- und Rechtsanwälte Dr. Solf & Zapf

(57) **Zusammenfassung**

Die vorliegende Erfindung betrifft ein Rad für ein Schienenfahrzeug, aufweisend einen Radreifen (1) mit einem am Innenumfang des Radreifens (1) ausgebildeten, sich in Richtung der Rotationsachse (X-X) des Rades erstreckenden umlaufenden Steg (9), einen Radkörper (3) mit einem am Außenumfang und an einer axialen Stirnseite des Radkörpers (3) ausgebildeten und radial nach außen verlaufenden Ringflansch (11), und einen an dem Radkörper (3) an einer dem Ringflansch (11) gegenüberliegenden Stirnseite über Befestigungsmittel (13) kraft- und/oder formschlüssig angebrachten Klemmring (5).Zwischen dem Klemmring (5) und dem umlaufenden Steg (9) des Radreifens (1) und zwischen dem umlaufenden Steg (9) des Radreifens (1) und dem Ringflansch (11) des Radkörpers (3) sind jeweils Dämpfungsmittel angeordnet, die jeweils als mindestens zwei separate, sich in Umlaufrichtung des Rades erstreckende Kreisringsegmente (7) ausgebildet sind. Die Kreisringsegmente (7) weisen an den Kontaktflächen zumindest einseitig mindestens zwei sich in axialer Richtung erstreckende und in Umlaufrichtung beabstandete Zentriernocken (19) auf, die formschlüssig in entsprechende Ausnehmungen (21) an dem umlaufenden Steg (9) des Radreifens (1) und an dem Ringflansch (11) des Radkörpers (3) beziehungsweise dem Klemmring (5) eingreifen. Die Kreisringsegmente (7) weisen einen Elastomerwerkstoff als Kern (15) auf, wobei der Kern (15) der Kreisringsegmente (7) zumindest an seinen an dem umlaufenden Steg (9) des Radreifens (1) und an dem Klemmring (5) beziehungsweise dem Ringflansch (11) des Radkörpers (3) anliegenden Kontaktflächen durch Blechsegmente (17) umschlossen ist.

## Beschreibung

Die Erfindung betrifft ein Rad für ein Schienenfahrzeug, aufweisend einen Radreifen mit einem am Innenumfang des Radreifens ausgebildeten, sich in Richtung der Rotationsachse erstreckenden umlaufenden Steg, einen Radkörper mit einem am Außenumfang und an einer axialen Stirnseite des Radkörpers ausgebildeten und radial nach außen verlaufenden Ringflansch, und einen an dem Radkörper an einer dem Ringflansch gegenüberliegenden Stirnseite über Befestigungsmittel kraft- und/oder formschlüssig angebrachten Klemmring, wobei zwischen dem Klemmring und dem umlaufenden Steg des Radreifens und zwischen dem umlaufenden Steg des Radreifens und dem Ringflansch des Radkörpers jeweils Dämpfungsmittel angeordnet sind. Zudem betriff die Erfindung ein Dämpfungsmittel für ein derartiges Rad und einen Radreifen für ein derartiges Rad.

Gattungsgemäße Räder werden in Schienenfahrzeugen des Nah- und Regionalverkehrs, den Straßenbahnen, Stadt- und U-Bahnen, S-Bahnen und Metros eingesetzt. Die im Markt eingesetzten, alle sehr ähnlichen gummigefederten Schienenfahrzeugräder bestehen im Wesentlichen aus einem Radkörper, Klemmring, einzelnen Gummiblöcken oder ein bzw. zwei Gummiringen und einem Radreifen. Allgemeines Ziel des Einsatzes von gummigefederten Rädern ist die Reduzierung von Stoßbelastungen, Vibrationen und Erschütterungen auf das Fahrwerk und den Wagenkasten. Dies wird erreicht durch die Reduzierung der unabgefederten Massen der Radsätze oder Portalachsen. Dies soll sich auch positiv auf die Beanspruchung der Gleise und deren Oberbau auswirken. Eine Reduzierung der Roll- und Quietschgeräusche wird durch die Entkopplung durch die Gummielemente und deren Dämpfung erreicht. Ein Vorteil gegenüber klassischen Vollrädern, bei denen das Rad einteilig aus Stahl ausgeführt wird, ist noch, dass nach Verschleiß des Rades nur der Radreifen mit ggf. den Gummiklötzen oder Gummiringen getauscht werden können, hingegen beim Vollrad das komplette Rad ersetzt werden muss. Bei der Verwendung gattungsgemäßer Räder entstehen kombinierte Scher- und Druckbeanspruchungen, die auf das Rad und insbesondere auf die Dämpfungsmittel des Rades wirken. Die Neigung der angeordneten elastischen Dämpfungsmittel gegenüber der Rotationsachse bestimmt, ob die Beanspruchung der Dämpfungsmittel vornehmlich bei radialer Beanspruchung im Betriebseinsatz nur Schub oder eine Kombination aus Schub und Druck ist.

Bekannt sind beispielsweise nachgiebige oder elastische Räder in Form so genannter Ein- oder Zweiringräder, bei denen die elastische Verbindung zwischen dem Radreifen und den beiden jeweils seitlich daneben mit Abstand angeordneten Flanschen von Radkörper und Klemmring mit je ein oder zwei konzentrisch zur Rotationsachse des Rades angeordneten Gummiringen oder umlaufend zueinander mit Abstand angeordneten zahlreichen Gummiblöcken aus einem elastischen Material mit vorbestimmter Querschnittsform erreicht wird. Dabei weisen die Ringe oder Blöcke oft eine im Wesentlichen viereckige Querschnittsform auf. Die Gummiblöcke sind dabei maßgeblich flach rechteckig oder mit zwei geneigten Schenkeln in flachen Winkeln ausgeführt. Derartige gummigefederte Räder mit Gummiklötzen stehen unter hoher Vorspannung und werden axial durch Schultern an Radreifen, Radkörper und Klemmring formschlüssig fixiert. Die Gummieinlagen werden hier maßgeblich auf Druck beansprucht. Diese Räder haben eine sehr hohe Steifigkeit und damit geringe Feder- / Dämpfereigenschaften.

Die EP 0 489 455 B1 beschreibt eine gattungsgemäße Ausführungsform eines gummigefederten Rades. Hierbei bestehen die Dämpfungsmittel, die in einem U-bzw. V-förmig ringförmigem Zwischenraum zwischen Radkörper, Radreifen und Klemmring angeordnet sind, aus einem Gummiring, der vorzugsweise einen stumpfen Winkel von 60° mit der Radachse bildet, und der bei der Montage vorgespannt ist.

Derartige Räder zeichnen sich je nach Winkelanstellung (15°, 30°, 60° oder größer, aber ≤ 90°) durch mittlere bis hohe Steifigkeiten aus und haben damit geringe bis mittlere Feder- / Dämpfereigenschaften. Mit steigender Winkelstellung der Gummiringe steigt die Beanspruchung von Druck mehr in Richtung Schubbeanspruchung.

Zusätzliche gattungsgemäße Ausführungsformen sind in US 2,138,506 A und US 2,175,118 A beschrieben. Diese Räder werden durch ihre zur Rotationsachse senkrecht ausgerichteten Ringe als Dämpfungsmittel nur auf Schub beansprucht und ermöglichen dadurch relativ hohe Einfederwege. Der Kontaktbereich zwischen Elastomer und Stahlbauteilen ist zum Teil mit Blechen versehen, welche einen Formschluss zur Kraftübertragung herstellen sollen. Diese Bleche werden bei Verwendung eines Gummimaterials durch einen Vulkanisierprozess mit dem elastischen Material zu einem Verbundbauteil vereint. Zudem ist eine Vielzahl von ausgeformten Vorsprüngen an den Kontaktflächen dieser Ringe beschrieben. Diese Vorsprünge werden in gleichmäßiger Teilung auf einem Kreisring angeordnet und in Form von Blechdurchzügen hergestellt.

Zudem ist eine weitere gattungsgemäße Ausführungsform eines Rades in der EP 0 893 279 B1 beschrieben. Bei dieser Ausführungsform sind die Dämpfungsmittel als zwei ähnliche Ringe aus einem Elastomermaterial ausgebildet, die jeweils eine Kegelstumpfform besitzen. Die beiden Ringe sind senkrecht zur Achse des Rades angebracht und symmetrisch zu einer zur Achse des Rades senkrechten Mittelebene angeordnet, wobei metallische Verstärkungen in jeden Ring eingebettet und benachbart zu der kegelstumpfförmigen Innen- bzw. Außenwand des Rings angeordnet sind. Jeder Ring weist auf der kegelstumpfförmigen Innen- wie auch Außenwand des Ringes vorstehende, verschiebungsverhindernde Vorsprünge auf. Derartige Räder mit umlaufenden Ringen und entsprechend vielen Vorsprüngen haben den Nachteil, dass sie eine Mehrfachpassung zwischen den Vorsprüngen der Ringe und den dazu passenden Vertiefungen des Radreifens beziehungsweise des Radkörpers oder des Klemmrings aufweisen. Die erforderlichen engen Toleranzen der Geometrie bei ringförmigen Gummielementen, insbesondere mit Blechen an den Außenseiten oder im Kern, und der Vorsprünge sowie deren Form und Lage erhöhen den Kostenaufwand für Herstellformen. Ebenso kann es zu Passungsproblemen in der Montage mit den benachbarten Metallteilen des Rades kommen, bei denen die entsprechenden Vertiefungen ebenfalls mit notwendig genauen Toleranzen in ihrer Geometrie sowie in Form und Lage herzustellen sind. Hier muss ein Abstandsspiel vorgesehen werden, um die Montage zu ermöglichen, welches sich nachteilig auf eine direkte Kraft- und Momentenübertragung auswirkt. Zudem sind die Herstellungs- und Lagerungskosten der Ringe als relativ große Bauteile vergleichsweise hoch. Je nach Raddurchmesser muss ein Hersteller jeweils mehrere Baugrößen solcher Ringe produzieren, um den Kundenwünschen Rechnung zu tragen. Des Weiteren ist die äußerste Schicht der Vorsprünge aus einem Elastomerwerkstoff, der einem im Vergleich zu Metall höheren Verschleiß unterliegt. Das Spiel in der Spielpassung selbst sowie dessen Vergrößerung kann durch Abnutzung der äußeren Elastomerschicht zum möglichen Durchrutschen der Dämpfungsmittel zwischen den Stahlbauteilen (Radreifen, Klemmring und Radkörper) führen beziehungsweise dieses beschleunigen.

Eine weitere bekannte gattungsgemäße Ausführungsform ist in der EP 2 357 092 B1 beschrieben. Bei dieser Ausführungsform sind die Dämpfungsmittel als mehrere über den Umfang des Rades gleichverteilte Gummiblöcke ausgebildet. Die Gummiblöcke sind beidseitig zwischen dem umlaufenden Steg des Radreifens und dem Ringflansch des Radkörpers beziehungsweise dem Klemmring angeordnet. Die Gummiblöcke haben eine Form von Ringsektoren und verlaufen in radialer Richtung senkrecht zur Rotationsachse des Rades. Die Gummiblöcke bestehen jeweils aus zwei Gummisegmenten, die entweder als in radialer Richtung übereinander angeordnete und über einen Gummisteg miteinander verbundene Gummiblöcke oder als zwei separate radial übereinander angeordnete Gummiblöcke ausgebildet sind. Die Gummisegmente weisen jeweils einseitig einen Vorsprung auf, mit dem sie im eingesetzten Zustand in eine zugeordnete Vertiefung des Klemmrings beziehungsweise des Ringflansches eingreifen. Derartige Räder haben insbesondere den Nachteil, dass die radiale Bauhöhe wegen der sich in radialer Richtung erstreckenden Gummiblöcke relativ groß ist. Dies ist insbesondere bei behindertengerechten Niederflurfahrzeugen unerwünscht. Zudem weist jedes Gummisegment der Gummiblöcke nur jeweils einen Vorsprung auf, so dass tangential verlaufende Kräfte beziehungsweise an den Gummisegmenten auftretende Torsionskräfte relativ schlecht aufgenommen werden können, was zu einem schnelleren Verschleiß der Gummisegmente führt. Insbesondere wegen des Verlaufs der Gummiblöcke in radialer Richtung senkrecht zur Rotationsachse führen hohe kombinierte Scher- und Druckbeanspruchungen zu hohen Scherkräften an den Gummiblöcken und insbesondere an den Vorsprüngen der Gummisegmente, so dass diese relativ schnell verschleißen. Zudem sind derartige Gummisegmente empfindlich gegenüber Walken, wie es im Betrieb der Räder vorkommt, so dass es vermehrt zu Schäden durch erhöhte Temperatur und Schlupf kommen kann.

Nachteilig ist bei den oben beschriebenen gummigefederten Rädern mit relativ vielen Gummiblöcken, dass bei der Montage die einzelnen Gummiblöcke zum einen manuell positioniert und dann beim Montageprozess gegen Heraus- bzw. Herunterfallen gesichert werden müssen. Zudem kann sich bei der Verwendung von Gummiblöcken auf Grund der Lücken zwischen den Gummiblöcken ein nicht konstantes Feder- und Dämpfungsverhalten ergeben. Das nicht konstante Verhalten wird verstärkt bei der Verwendung von Gummielementen, die in Einbauposition nicht axial-symmetrisch zur Radachse angeordnet sind.

Der Erfindung liegt die Aufgabe zugrunde, ein Rad für ein Schienenfahrzeug zur Verfügung zu stellen, welches die obigen Nachteile und Probleme vermeidet und eine hohe Beanspruchungsfähigkeit, eine hohe Lebensdauer, ein gutes Feder- und Dämpfungsvermögen, eine geringe Geräuschbelastung, einen geringen Platzbedarf und eine geringe Bauform, eine einfache Wartbarkeit und Austauschbarkeit und eine gute Wirtschaftlichkeit ermöglicht.

Die Aufgabe wird erfindungsgemäß durch ein Rad mit den kennzeichnenden Merkmalen des Anspruchs 1 und durch ein Dämpfungsmittel gemäß Anspruch 20 und durch einen Radreifen gemäß Anspruch 21 gelöst. Insbesondere dadurch, dass die Dämpfungsmittel jeweils als mindestens zwei separate, sich in Umlaufrichtung des Rades erstreckende Kreisringsegmente ausgebildet sind, wobei die Kreisringsegmente an den Kontaktflächen zumindest einseitig mindestens zwei sich in axialer Richtung erstreckende und in Umlaufrichtung beabstandete Zentriernocken aufweisen, die formschlüssig in entsprechende Ausnehmungen an dem Ringflansch des Radkörpers beziehungsweise dem Klemmring und an dem umlaufenden Steg des Radreifens eingreifen, wobei die Kreisringsegmente einen Elastomerwerkstoff als Kern aufweisen, wobei der Kern der Kreisringsegmente zumindest an seinen an dem umlaufenden Steg des Radreifens und an dem Klemmring beziehungsweise dem Ringflansch des Radkörpers anliegenden Kontaktflächen durch Blechsegmente umschlossen ist.

Durch die Gestaltung der Dämpfungsmittel als mehrere sich in Umlaufrichtung des Rades erstreckende Kreisringsegmente werden die Dämpfungsmittel zwischen umlaufendem Steg und Ringflansch beziehungsweise zwischen umlaufendem Steg und Klemmring in mehrere separate Segmente unterteilt. Dabei ist es besonders vorteilhaft, wenn jedes Kreisringsegment jeweils zwei Zentriernocken auf zumindest einer Kontaktfläche aufweist. Dies ermöglicht eine eindeutige Positionierung der Kreisringsegmente. Dadurch wird die Anzahl der benötigten Passungen pro zu montierendem Teil reduziert, so dass die Herstellungstoleranzen relativ größer bemessen werden können. Daraus ergeben sich reduzierte Herstellungskosten des Radreifens, des Klemmrings, der Dämpfungsmittel und des Radkörpers. Zudem wird eine Montage der Dämpfungsmittel vereinfacht, da weniger Passungen gleichzeitig pro Teil gefügt werden müssen. Durch die Aufteilung der Dämpfungsmittel in mehrere gleich ausgebildete Kreisringsegmente mit im Vergleich zu vollen Ringen relativ kleiner Größe wird der benötigte Platz für die Lagerung bei Montage und Demontage reduziert. Zudem können die gleichen Kreisringsegmente unter Umständen für verschiedene Raddurchmesser verwendet werden. Außerdem werden deutlich kleinere Formen und Werkzeuge in der Produktion benötigt. Ebenso können somit kleinere Raddurchmesser realisiert werden. Die Umschließung des aus Elastomerwerkstoff gebildeten Kerns der Kreisringsegmente mittels Blechsegmenten ermöglicht eine Aufnahme höherer Scher- und Druckbeanspruchungen und verringert den Verschleiß der Dämpfungsmittel. Die Anordnung von mindestens zwei in Umfangrichtung beabstandeten Zentriernocken an einem Kreissegment verbessert die Langlebigkeit, da die an den Kreisringsegmenten auftretenden tangential verlaufenden Kräfte beziehungsweise auftretenden Torsionskräfte im Rad direkt aufgenommen werden können.

In einer vorteilhaften Ausführungsform der Erfindung sind die Zentriernocken des Kreisringsegmentes als ein geschlossener Napf ausgebildet, in dem der Elastomerwerkstoff durch die Blechsegmente mit gekammert und voll umschlossen ist. Vorteilhafterweise sind die Kreisringsegmente als Verbundbauteil aus einem Grundkörper aus Elastomerwerkstoff und ausgeformten einteiligen Blechen ausgebildet. Insbesondere ist die Form der Zentriernocken des Kreisringsegmentes zylindrisch, paraboloidförmig oder kegelstumpfförmig ausgebildet ist. Diese Gestaltungsmerkmale verbessern die Aufnahme der auftretenden Kräfte und erhöhen die Langlebigkeit der Kreisringsegmente, wobei die Herstellungskosten minimiert werden.

In einer weiteren vorteilhaften Ausführungsform der Erfindung ist am Übergang der Grundform des Blechsegmentes in den Zentriernocken des Kreisringsegmentes eine nach innen in den Elastomerwerkstoff zurückspringende, um die Zentriernocken umlaufende, aus Radien bestehende Sicke ausgebildet. Dies minimiert die Beanspruchung des Übergangsbereichs von den Zentriernocken zum Grundkörper des Kreisringsegmentes.

Vorteilhafterweise sind in einer weiteren Ausführungsform der Erfindung die Kontaktflächen der Kreisringsegmente und die anliegenden Anlageflächen des umlaufenden Steges und des Klemmrings beziehungsweise des Ringflansches derart ausgebildet, dass sie einen Winkel von 45° bis 90°, vorteilhafterweise 74° mit der Rotationsachse des Rades einschließen. Dies ermöglicht eine ausgewogene Aufteilung der auftretenden Lasten in Schub- und Drucklasten und ein verbessertes Feder- und Dämpfungsverhalten.

Weitere vorteilhafte Ausgestaltungen der Erfindung ergeben sich aus der folgenden Figurenbeschreibung und den Unteransprüchen.

Es zeigen:
- Fig. 1: einen Teil-Schnitt durch eine erste Ausführungsform eines erfindungsgemäßen Rades im Bereich der Befestigungsmittel des Klemmrings mit einer ersten Ausführungsform eines Kreisringsegmentes,
- Fig. 2: einen Teil-Schnitt durch eine zweite Ausführungsform eines erfindungsgemäßen Rades mit einer zweiten Ausführungsform eines Kreisringsegmentes,
- Fig. 3: eine Seitenansicht eines erfindungsgemäßen Rades mit Darstellung und Ansicht auf die eingesetzten Kreisringsegmente,
- Fig. 4a: eine dreidimensionale Darstellung einer ersten Ausführungsform eines nicht eingeklemmten Kreisringsegmentes für ein Rad gemäß Fig. 1,
- Fig. 4b: eine Seitenansicht der ersten Ausführungsform eines nicht eingeklemmten Kreisringsegmentes für ein Rad gemäß Fig. 4a,
- Fig. 4c: einen Querschnitt A-A des Kreisringsegmentes gemäß Fig. 4b,
- Fig. 4d: einen Querschnitt B-B des Kreisringsegmentes gemäß Fig. 4b mit konisch beziehungsweise kegelstumpfförmig ausgeführten Zentriernocken,
- Fig. 5a: eine Seitenansicht einer dritten Ausführungsform eines nicht eingeklemmten Kreisringsegmentes für ein erfindungsgemäßes Rad,
- Fig. 5b: einen Querschnitt A-A des Kreisringsegmentes gemäß Fig. 5a,
- Fig. 6: eine schematische Darstellung einer zweiten erfindungsgemäßen Anordnung der Kreisringsegmente eines erfindungsgemäßem Rades,
- Fig. 7: eine schematische Darstellung einer dritten erfindungsgemäßen auf der Klemmring- und Radkörperseite versetzten Anordnung der Kreisringsegmente eines erfindungsgemäßen Rades,
- Fig. 8: eine schematische Darstellung einer vierten erfindungsgemäßen Anordnung mit auf unterschiedlichen Kreisbahnen angeordneten Kreisringsegmenten eines erfindungsgemäßem Rades,
- Fig. 9a: eine Teil-Seitenansicht einer weiteren Ausführungsform zweier benachbarter überlappender Enden von erfindungsgemäßen Kreisringsegmenten für ein erfindungsgemäßes Rad,
- Fig. 9b: eine Teil-Seitenansicht einer weiteren Ausführungsform zweier benachbarter überlappender Enden von erfindungsgemäßen Kreisringsegmenten für ein erfindungsgemäßes Rad,
- Fig. 10a,10b: einen Querschnitt durch weitere Ausführungsformen eines erfindungsgemäßen Kreisringsegmentes mit zylindrisch oder parabolisch ausgeführten Zentriernocken und
- Fig. 11: einen Querschnitt durch eine weitere Ausführungsform eines erfindungsgemäßen Kreisringsegmentes mit Einlagen aus verschiedenen möglichen Werkstoffen, Geometrien, Anzahl und Lage im Kern,
- Fig. 12: einen Querschnitt durch eine weitere Ausführungsform eines erfindungsgemäßen Kreisringsegmentes mit einer Öffnung in den Blechsegmenten.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

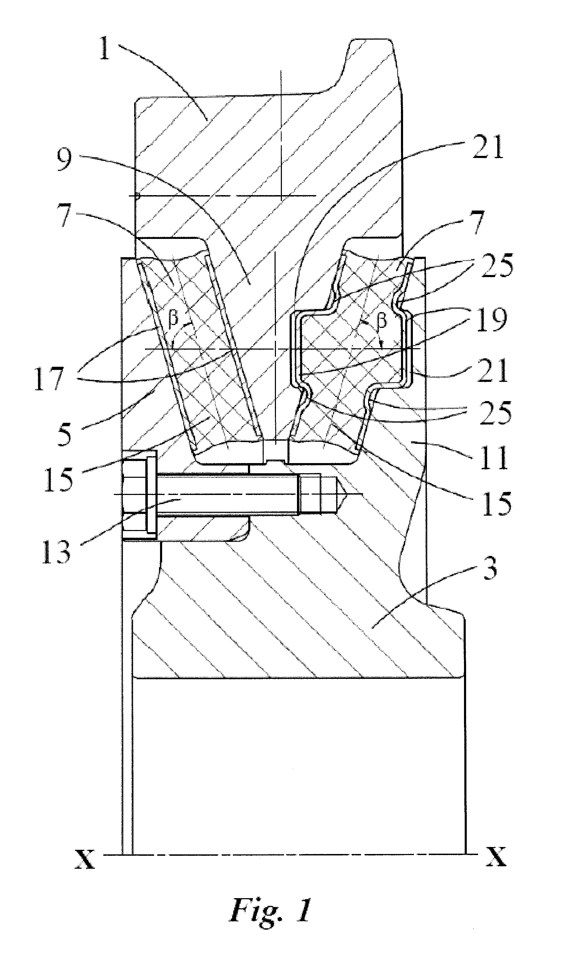

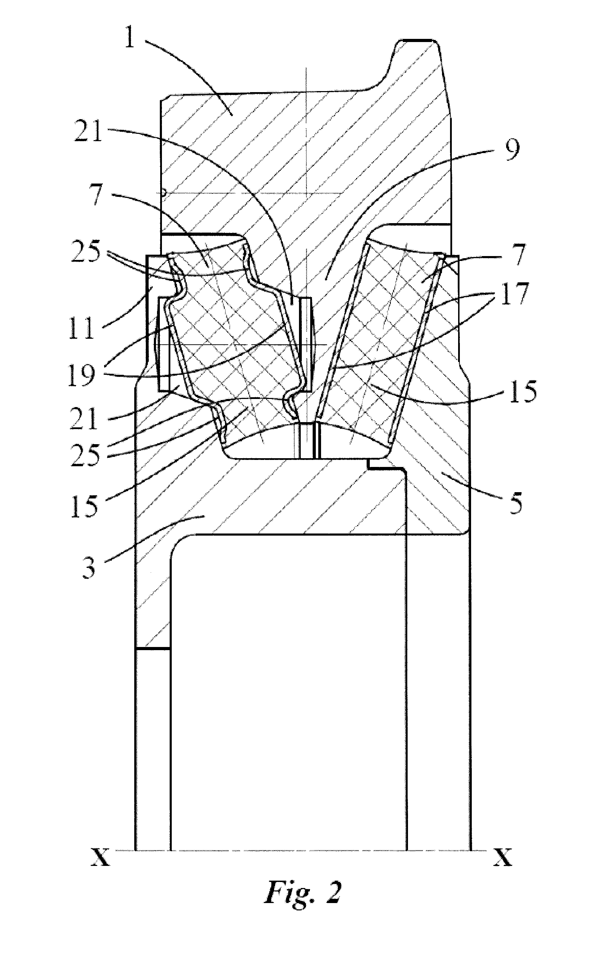

Fig. 1 und Fig. 2 zeigen jeweils einen Teil-Schnitt durch eine erste und eine zweite Ausführungsform eines erfindungsgemäßen Rades. Das Rad umfasst einen Radreifen 1, einen Radkörper 3, einen Klemmring 5 und mehrere als Kreisringsegmente 7 ausgebildete Dämpfungsmittel. Der Radreifen 1 weist einen sich von seinem Innenumfang in Richtung der Rotationachse X-X erstreckenden umlaufenden Steg 9 auf. Der Radkörper ist als Radnabe des Rades ausgebildet und weist an seinem Außenumfang und an seiner axialen Stirnseite einen radial nach außen verlaufenden Ringflansch 11 auf. Der Klemmring 5 ist an dem Radkörper 3 an einer dem Ringflansch 11 gegenüberliegenden Stirnseite über Befestigungsmittel 13 kraft- und/oder formschlüssig angebracht. In Fig. 2 sind die Befestigungsmittel 13 nicht dargestellt, da der Teil-Schnitt der Fig. 2 nicht durch die Befestigungsmittel 13 geht. Die Befestigungsmittel 13 umfassen insbesondere mehrere Radschrauben und zugehörige Gewindelöcher. Mittels des Klemmrings 5 werden die Kreisringsegmente 7 unter eine seitliche in etwa axialer Richtung X-X verlaufende Druckvorspannung versetzt. Dabei sind die Befestigungsmittel 13 derart angeordnet und am Umfang des Rades verteilt, dass eine gleichmäßige Vorspannung der Kreisringsegmente 7 erreicht werden kann.

Mindestens zwei separate Kreisringsegmente 7 sind jeweils zwischen dem Klemmring 5 und dem umlaufenden Steg 9 des Radreifens 1 und zwischen dem umlaufenden Steg 9 und dem Ringflansch 11 des Radkörpers 3 angeordnet und insbesondere über den Umfang des umlaufenden Steges auf jeder Seite jeweils gleichmäßig verteilt. Die Kreisringsegmente 7 erstrecken sich in Umlaufrichtung des Rades. Die Kreisringsegmente 7 weisen einen Kern 15 aus einem Elastomerwerkstoff auf, wobei der Kern 15 der Kreisringsegmente 7 zumindest an seinen an dem Klemmring 5 beziehungsweise dem Ringflansch 11 und an dem umlaufenden Steg 9 anliegenden Kontaktflächen durch Blechsegmente 17 umschlossen ist. Dabei ist das Elastomer-Volumen des Kerns 15 insbesondere spiegelsymmetrisch zu den Querschnittsachsen des Kreisringsegmentes 7 gleich verteilt. Die Blechsegmente 17 sind mit den Zentriernocken vorzugsweise aus einem Rohteil, insbesondere durch Umformung, gefertigt. Die Kreisringsegmente 7 weisen an den Kontaktflächen zumindest einseitig, insbesondere beidseitig, mehrere, insbesondere jeweils zwei, sich vorzugsweise in axialer Richtung X-X erstreckende geschlossene Zentriernocken 19 auf. Die Zentriernocken 19 sind in Umfangsrichtung voneinander beabstandet angeordnet. Die Zentriernocken 19 greifen formschlüssig in entsprechende Ausnehmungen 21 an dem Ringflansch 11 beziehungsweise dem Klemmring 5 und/oder an dem umlaufenden Steg 9 ein. Insbesondere ist zwischen den Zentriernocken 19 und einem Boden der Ausnehmungen 21 in dem umlaufenden Steg 9 und/oder in dem Klemmring 5 beziehungsweise dem Ringflansch 11 ein Spiel vorhanden. Durch die Zentriernocken 19 und die Ausnehmungen 21 ist die Position der Kreisringsegmente 7 im Rad bestimmt und toleranzmäßig eindeutig beherrschbar.

In einer vorteilhaften Ausführungsform sind auf den Außenflächen der Blechsegmente 17, insbesondere nur auf den Grundflächen der Blechsegmente 17, d. h. nicht im Bereich der Zentriernocken, eine dünne, vorzugsweise im Bereich von 0,1 mm bis 3 mm dicke, Beschichtung, vorzugsweise aus einem Elastomer aufgebracht. Die Elastomerschicht oder Beschichtung vermeidet die Neigung zu Mikroschlupf und damit Verschleiß und Korrosion zwischen den Blechsegmenten und den Anlageflächen der angrenzenden Bauteile.

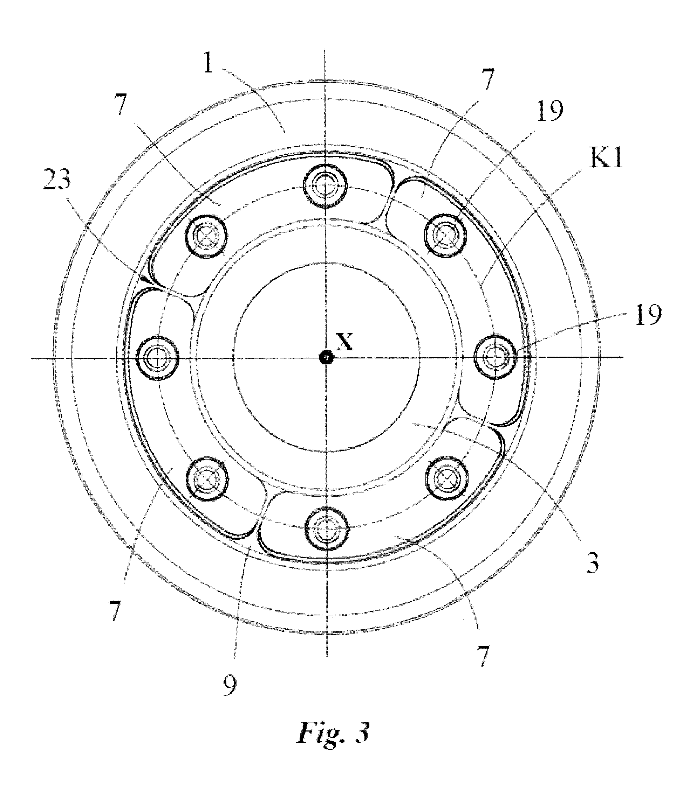

Wie in der Seitenansicht eines erfindungsgemäßen Rades in Fig. 3 ersichtlich, sind die Kreisringsegmente 7 in einer vorteilhaften Ausführungsform zwischen dem umlaufenden Steg 9 und dem Ringflansch 11 beziehungsweise dem Klemmring 5 in Form eines Kreisrings auf einer Kreisbahn K1 mit konstantem Radius umlaufend nebeneinander angeordnet. Vorteilhafterweise sind die Kreisringsegmente 7 radial mittig auf der Kreisbahn K1 angeordnet. Insbesondere sind auf jeder Seite des umlaufenden Steges 9 jeweils vier Kreisringsegmente 7 angeordnet. Die Anzahl der Kreisringsegmente 7 kann auf einer Seite des umlaufenden Steges 9 grundsätzlich gerade oder ungerade sein. Dabei ist es besonders vorteilhaft, wenn die Zentriernocken 19 derart an den Kontaktflächen der Kreisringsegmente 7 angeordnet sind, dass die Zentriernocken 19 mit ihrem Mittelpunkt ebenfalls auf der Kreisbahn K1 liegen. Insbesondere sind die Kreisringsegmente 7 derart ausgebildet und auf der Kreisbahn K1 angeordnet, dass zwischen den in Umlaufrichtung benachbarten Stirnseiten zweier Kreisringsegmente 7 ein Spiel vorhanden ist und dadurch eine Stoßlücke 23 zwischen den Stirnseiten gebildet wird. Die Zentriernocken 19 des Kreisringsegmentes 7 sind insbesondere jeweils als ein geschlossener Napf ausgebildet, in dem der Elastomerwerkstoff des Kerns 15 durch die Blechsegmente 17 mit gekammert und vollständig umschlossen ist. Die Kreisringsegmente 7 sind vorteilhafterweise als Verbundbauteil aus dem Kern 15 aus Elastomerwerkstoff und den ausgeformten einteiligen Blechsegmenten 17 ausgebildet. Dabei sind die Blechsegmente 17 insbesondere mittels Vulkanisierung, Klebung oder eingepresst formschlüssig mit dem Elastomerwerkstoff des Kerns 15 verbunden.

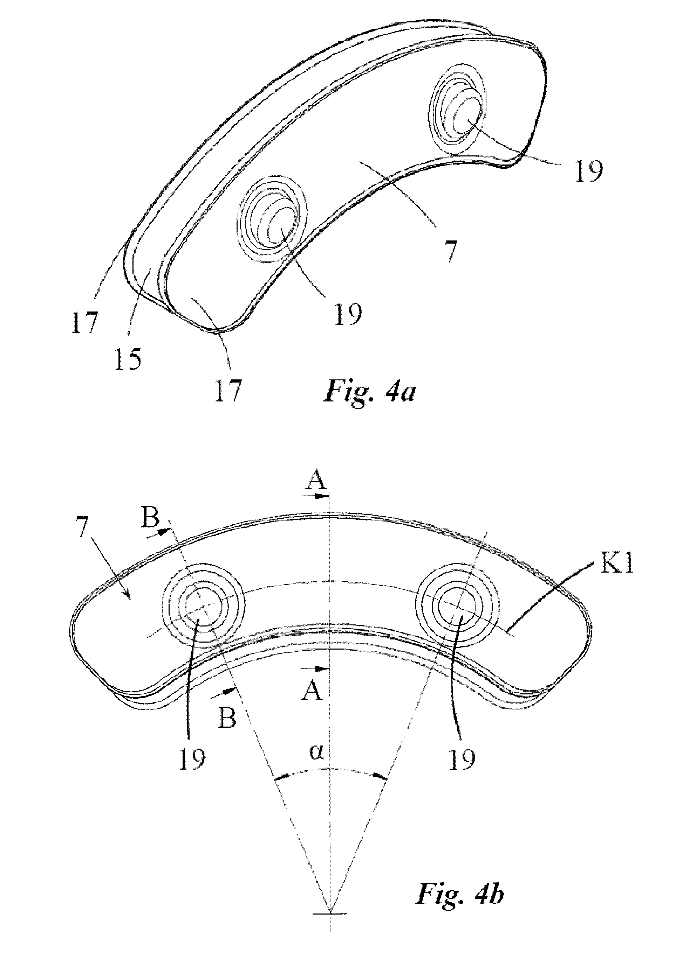

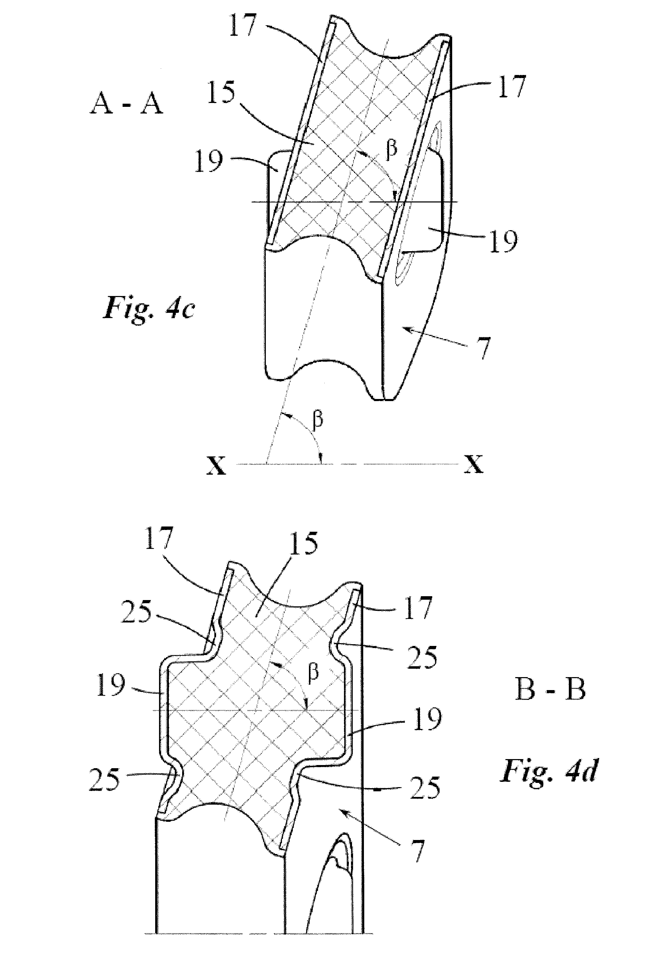

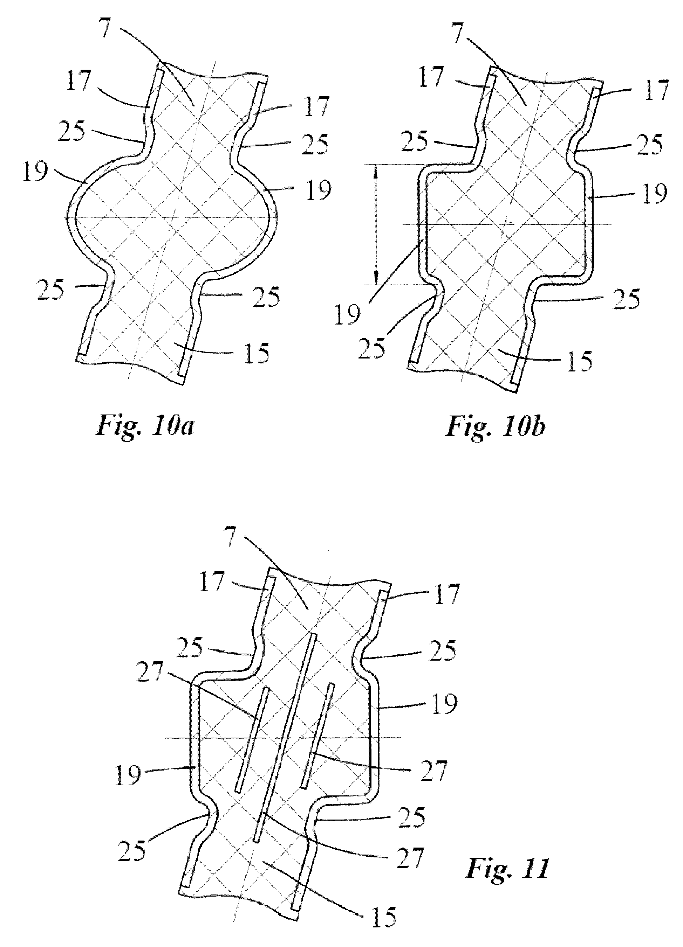

In Fig. 4a, 4b, 4c, und 4d ist eine vorteilhafte Ausführungsform eines erfindungsgemäßen Kreisringsegmentes 7 dargestellt. Die äußere Form der Zentriernocken 19 des Kreisringsegmentes 7 ist vorzugsweise kegelstumpfförmig ausgebildet. Dies ermöglicht insbesondere eine passgenaue Montage und einen festen Sitz der Kreisringsegmente 7 in den Ausnehmungen 21. Durch die besondere Formgebung und die Umhüllung mit den Blechsegmenten 17 kann insbesondere auch ein Herausfallen der Kreisringsegmente 7 aus den Ausnehmungen 21 während der Montage oder Demontage vermieden werden. In dieser Ausführungsform verlaufen die sich in axialer Richtung auf unterschiedlichen Kontaktflächen gegenüberliegenden Zentriernocken 19 eines Kreisringsegmentes 7 radial mit gleichem Abstand zur Rotationsachse X-X. Die Kontaktflächen der Kreisringsegmente 7 und insbesondere die Blechsegmente 17 sind vorteilhafterweise derart ausgebildet und angeordnet, dass sie mit der Rotationsachse X-X einen spitzen Winkel β im Bereich von größer 45° bis 90°, vorzugsweise 74° einschließen. Dabei ist es besonders vorteilhaft, wenn am Übergang der Grundform eines Blechsegmentes 17 in den Zentriernocken 19 des Kreisringsegmentes 7 eine nach innen in den Elastomerwerkstoff des Kerns 15 zurückspringende, um die Zentriernocken 19 umlaufende, aus Radien bestehende Sicke 25 ausgebildet ist. Alternativ können die Zentriernocken 19 aber auch paraboloidförmig oder zylindrisch, wie zum Beispiel in Fig. 10a, 10b ersichtlich, oder kegelstumpfförmig, wie zum Beispiel in Fig. 2 ebenfalls ersichtlich, ausgebildet sein.

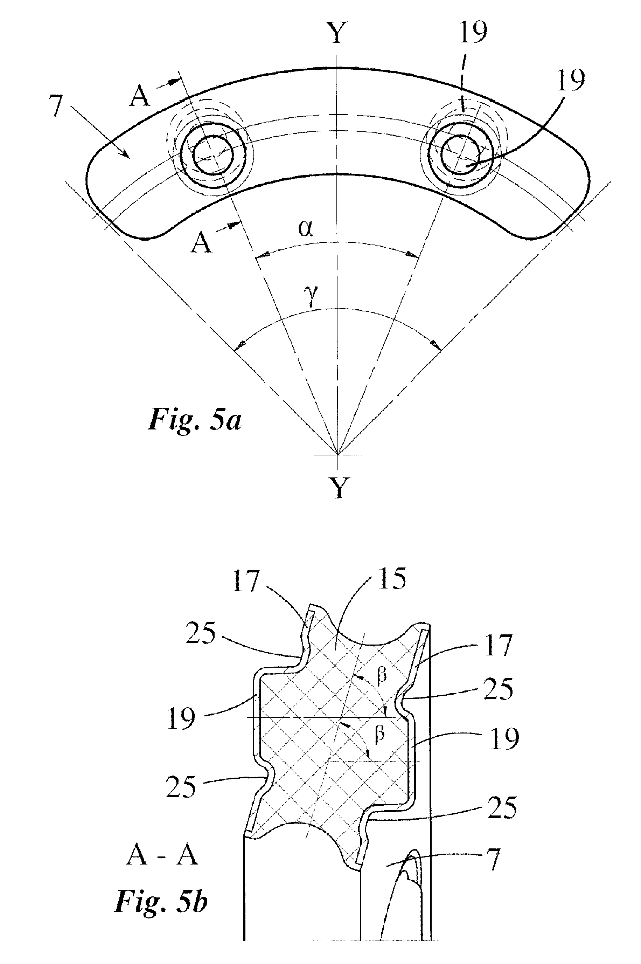

In Fig. 5a, 5b ist eine weitere Ausführungsform eines erfindungsgemäßen Kreisringsegmentes 7 dargestellt. Bei dieser Ausführungsform verlaufen die sich in axialer Richtung auf unterschiedlichen Kontaktflächen gegenüberliegenden Zentriernocken 19 eines Kreisringsegmentes 7 radial mit unterschiedlichem Abstand zur Rotationsachse X-X. Sie sind somit radial zueinander versetzt.

Alle Kreisringsegmente 7 eines Rades sind vorteilhafterweise als Einzelteil gleich ausgebildet. Die Kreisringsegmente 7 sind insbesondere spiegelsymmetrisch zu Ihrer mittigen Querschnittsachse Y-Y ausgebildet. Dabei ist es besonders vorteilhaft, wenn sich ein Kreisringsegment 7 über einen Kreissegment des Rades mit einem Mittelpunktswinkel γ von 30° bis 180°, vorzugsweise 90° erstreckt. Insbesondere ist der Abstand der Mittelpunkte zweier Zentriernocken 19 in Umlaufrichtung auf einer Kontaktfläche eines Kreisringsegmentes 7 derart ausgebildet, dass die Mittelpunkte der Zentriernocken 19 ein Kreissegment des Rades mit einem Mittelpunktswinkel α von 15° bis 90°, vorzugsweise 45° einschließen.

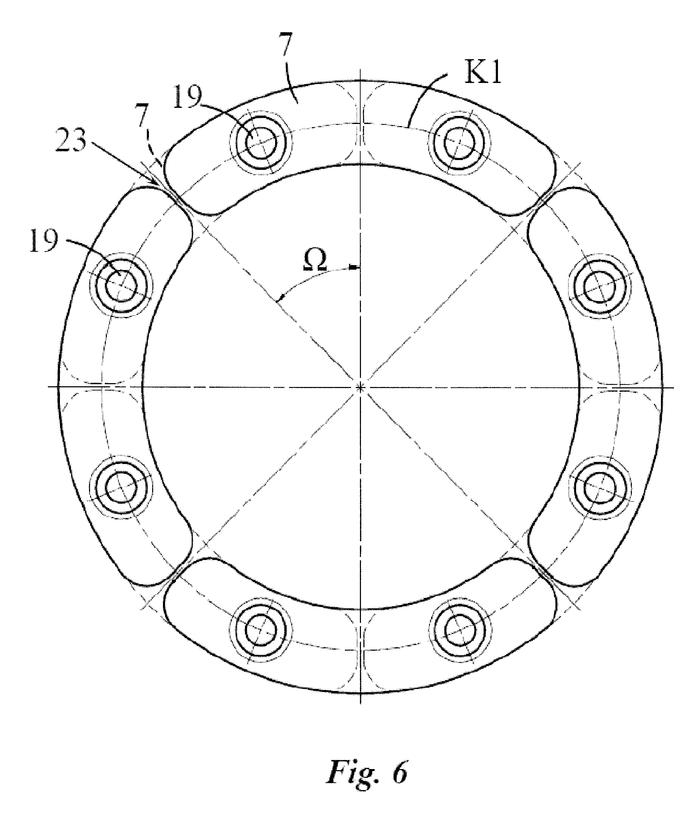

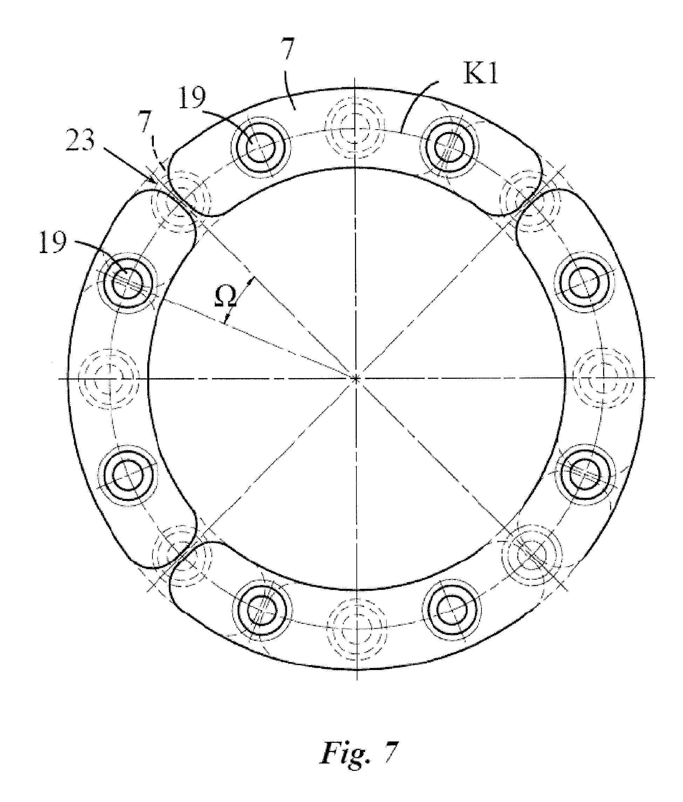

In einer vorteilhaften Ausführungsform gemäß Fig. 6 oder gemäß Fig. 7 sind die Kreisringsegmente 7 auf einer Seite des umlaufenden Steges 9 des Radreifens 1 mit einem bestimmten Winkel Ω von 15° bis 60°, insbesondere 45° versetzt zu den Kreisringsegmenten 7 auf der anderen Seite des umlaufenden Steges 9 angeordnet.

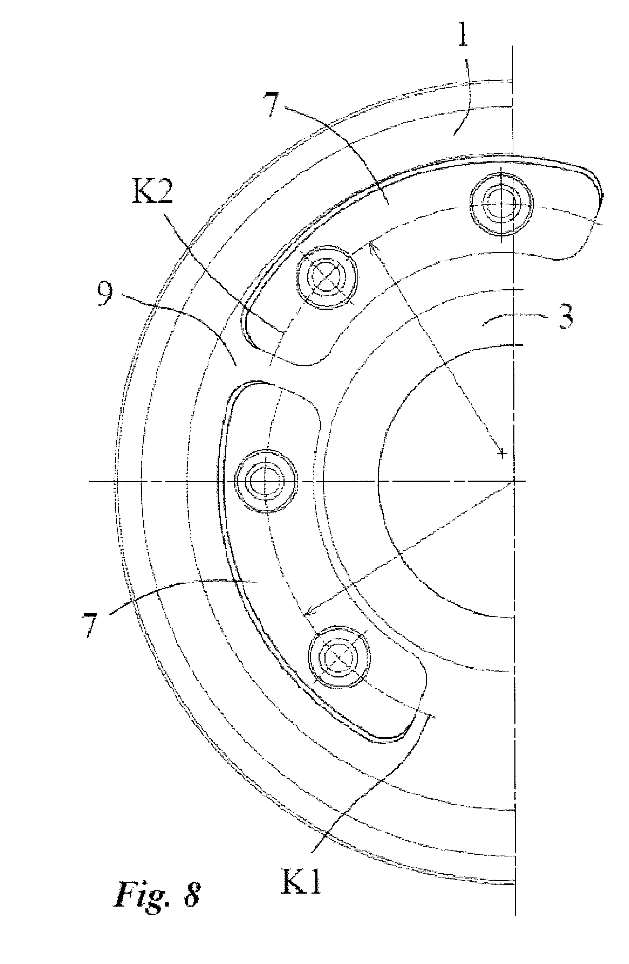

Gemäß Fig. 8 sind in einer weiteren vorteilhaften Ausführungsform die Kreisringsegmente 7 zwischen dem umlaufenden Steg 9 und dem Ringflansch 11 beziehungsweise dem Klemmring 5 auf einer Seite des umlaufenden Steges 9 in mindestens zwei Gruppen mit zur Rotationsachse des Rades verschiedenen Kreisbahnen K1 und K2 mit unterschiedlichen Radien zueinander versetzt angeordnet. Dabei ist es vorteilhaft, wenn die Gruppen der Kreisringsegmente 7 spiegelsymmetrisch zur Mittelebene des Rades angeordnet sind, wobei die Stoßlücken 23 der Kreisringsegmente 7 der einzelnen Gruppen zueinander winklig versetzt sind.

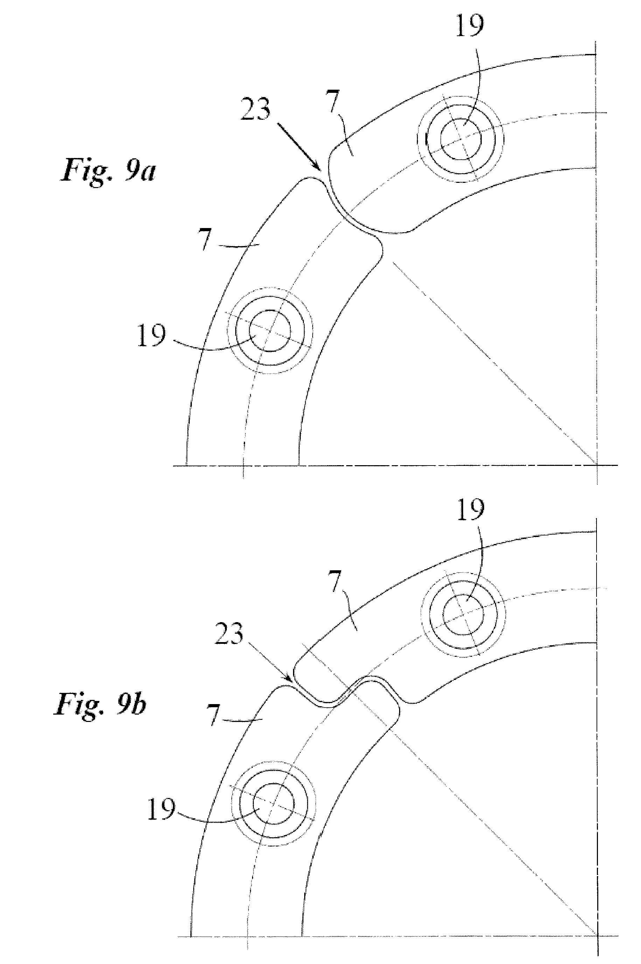

In Fig. 9a und 9b sind weitere vorteilhafte Ausführungsformen der Enden der Kreisringsegmente 7 dargestellt, bei denen zwei angrenzende Kreisringsegmente 7 zwischen den Stoßlücken 23 an den jeweiligen Enden überlappend ausgebildet sind. Fig. 11 zeigt eine weitere vorteilhafte Ausführungsform eines Kreisringsegmentes 7, bei dem in den Kern 15 zusätzlich Einlagen 27 in der Elastomer-Schicht angeordnet sind. Die Einlagen können aus verschiedenen Werkstoffen, mit verschiedenen Geometrien und unterschiedlicher Anzahl oder Lage ausgebildet sein. Insbesondere können sie aus Blechen, Drähten bestehen oder als Gestricke oder Kissen ausgebildet sein. Dies ermöglicht, die Elastizität der Kreisringsegmente 7 an bestimmte Feder- oder Dämpfungsanforderungen anzupassen.

Der Ringflansch 11 des Radkörpers 3, der Klemmring 5 und der umlaufende Steg 9 des Radreifens 1 weisen zu der verwendeten Ausführungsform des erfindungsgemäßen Kreisringsegmentes 7 passgenau ausgebildete Kontaktflächen und entsprechende Ausnehmungen 21 auf.

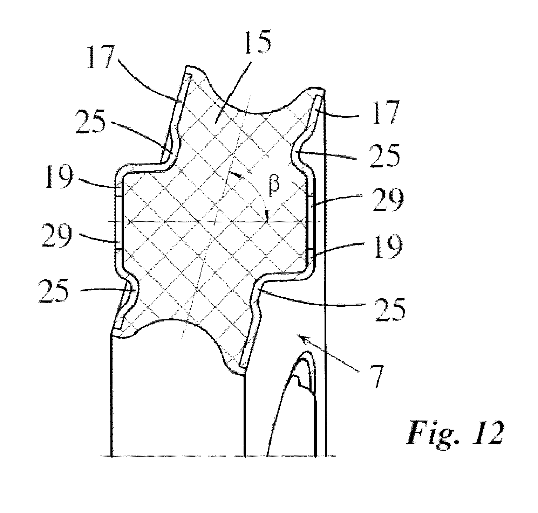

Fig. 12 zeigt eine weitere vorteilhafte Ausgestaltung eines erfindungsgemäßen Kreisringsegmentes 7. In den Blechsegmenten 17 ist im Bereich der Zentriernocken 19 mindestens eine Öffnung 29 angeordnet. Dabei kann die Öffnung 29 durch Material des Kerns 15 ausgefüllt oder, wie hier dargestellt, nicht durch Material des Kerns 15 ausgefüllt sein. Die Öffnung ist vorzugsweise mittig im Zentriernocken 19 angeordnet. Die Öffnung 29 hat insbesondere den Vorteil den Umformungsprozess der Blechsegmente 17, insbesondere bei der Verwendung von festeren oder dickeren Materialien, zu vereinfachen. Vorteilhafterweise kann dadurch eine passgenaue Umformung der Blechsegmente 17 einfacher erreicht werden. Die Öffnung 29 ist insbesondere in Kombination mit allen vorher beschriebenen Ausführungsformen der Zentriernocken 19 denkbar.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

### Bezugszeichenliste

- 1: Radreifen
- 3: Radkörper
- 5: Klemmring
- 7: Kreisringsegmente
- 9: umlaufender Steg
- 11: Ringflansch
- 13: Befestigungsmittel
- 15: Kern
- 17: Blechsegmente
- 19: Zentriernocken
- 21: Ausnehmungen
- 23: Stoßlücke
- 25: Sicke
- 27: Einlagen
- 29: Öffnung

- α: Winkel Abstand Zentriernocken
- β: Winkel Kontaktflächen Kreissegment
- γ: Winkel Länge Kreissegment
- Ω: Winkel Versatz Kreisringsegmente

- K1,K2: Kreisbahn
- X-X: Rotationsachse
- A-A: Querschnittsachse Kreissegment
- B-B: Querschnittsachse Kreissegment
- Y-Y: Querschnittsachse Kreissegment

## Patentansprüche

1. Rad für ein Schienenfahrzeug, aufweisend einen Radreifen (1) mit einem am Innenumfang des Radreifens (1) ausgebildeten, sich in Richtung der Rotationsachse (X-X) des Rades erstreckenden umlaufenden Steg (9), einen Radkörper (3) mit einem am Außenumfang und an einer axialen Stirnseite des Radkörpers (3) ausgebildeten und radial nach außen verlaufenden Ringflansch (11), und einen an dem Radkörper (3) an einer dem Ringflansch (11) gegenüberliegenden Stirnseite über Befestigungsmittel (13) kraft- und/oder formschlüssig angebrachten Klemmring (5), wobei zwischen dem Klemmring (5) und dem umlaufenden Steg (9) des Radreifens (1) und zwischen dem umlaufenden Steg (9) des Radreifens (1) und dem Ringflansch (11) des Radkörpers (3) jeweils Dämpfungsmittel angeordnet sind,
**dadurch gekennzeichnet, dass**
die Dämpfungsmittel jeweils als mindestens zwei separate, sich in Umlaufrichtung des Rades erstreckende Kreisringsegmente (7) ausgebildet sind, wobei die Kreisringsegmente (7) an den Kontaktflächen zumindest einseitig mindestens zwei sich in axialer Richtung erstreckende und in Umlaufrichtung beabstandete Zentriernocken (19) aufweisen, die formschlüssig in entsprechende Ausnehmungen (21) an dem umlaufenden Steg (9) des Radreifens (1) und an dem Ringflansch (11) des Radkörpers (3) beziehungsweise dem Klemmring (5) eingreifen, wobei die Kreisringsegmente (7) einen Elastomerwerkstoff als Kern (15) aufweisen, wobei der Kern (15) der Kreisringsegmente (7) zumindest an seinen an dem umlaufenden Steg (9) des Radreifens (1) und an dem Klemmring (5) beziehungsweise dem Ringflansch (11) des Radkörpers (3) anliegenden Kontaktflächen durch Blechsegmente (17) umschlossen ist.

2. Rad nach Anspruch 1,
**dadurch gekennzeichnet, dass**
die Zentriernocken (19) der Kreisringsegmente (17) als ein geschlossener Napf ausgebildet sind, in dem der Elastomerwerkstoff durch die Blechsegmente (17) mit gekammert und voll umschlossen ist.

3. Rad nach Anspruch 1 oder 2,
**dadurch gekennzeichnet, dass**
die Form der Zentriernocken (19) der Kreisringsegmente (7) kegelstumpfförmig , zylindrisch oder paraboloidförmig ausgebildet ist.

4. Rad nach einem der Ansprüche 1 bis 3,
**dadurch gekennzeichnet, dass**
am Übergang der Grundform des Blechsegmentes (17) in den Zentriernocken (19) des Kreisringsegmentes (7) eine nach innen in den Elastomerwerkstoff zurückspringende, um die Zentriernocken (19) umlaufende, aus Radien bestehende Sicke (25) ausgebildet ist.

5. Rad nach einem der Ansprüche 1 bis 4,
**dadurch gekennzeichnet, dass**
die Kreisringsegmente (7) jeweils genau zwei Zentriernocken (19) auf jeder Kontaktfläche aufweisen.

6. Rad nach einem der Ansprüche 1 bis 5,
**dadurch gekennzeichnet, dass**
die Kreisringsegmente (7) als Verbundbauteil aus einem Kern (15) aus Elastomerwerkstoff und zwei ausgeformten einteiligen Blechsegmenten (17) ausgebildet sind.

7. Rad nach Anspruch 6,
**dadurch gekennzeichnet, dass**
die Blechsegmente und der Elastomerwerkstoff vulkanisiert, geklebt oder formschlüssig über die Zentriernocken eingepresst sind.

8. Rad nach Anspruch 6 oder 7,
**dadurch gekennzeichnet, dass**
auf den Außenflächen der Blechsegmente (17) eine Elastomerschicht aufgebracht ist.

9. Rad nach einem der Ansprüche 1 bis 8,
**dadurch gekennzeichnet, dass**
die Kreisringsegmente (7) zwischen dem umlaufenden Steg (9) und dem Ringflansch (11) beziehungsweise dem Klemmring (5) in Form eines Kreisrings auf einer Kreisbahn (K1) mit konstantem Radius umlaufend nebeneinander angeordnet sind.

10. Rad nach Anspruch 9,
**dadurch gekennzeichnet, dass**
die Kreisringsegmente (7) derart ausgebildet und auf der Kreisbahn (K1) angeordnet sind, dass zwischen den in Umlaufrichtung benachbarten Stirnseiten zweier Kreisringsegmente (7) ein Spiel vorhanden ist und dadurch eine Stoßlücke (23) zwischen den Stirnseiten gebildet wird.

11. Rad nach Anspruch 10,
**dadurch gekennzeichnet, dass**
die Gruppen der Kreisringsegmente (7) spiegelsymmetrisch zu einer Mittelebene des Rades angeordnet sind, wobei die Stoßlücken (23) der Kreisringsegmente (7) der einzelnen Gruppen zueinander winklig versetzt sind.

12. Rad nach einem der Ansprüche 10 oder 11,
**dadurch gekennzeichnet, dass**
zwei angrenzende Kreisringsegmente (7) zwischen den Stoßlücken (23) an den jeweiligen Enden überlappend ausgebildet sind.

13. Rad nach einem der Ansprüche 1 bis 9,
**dadurch gekennzeichnet, dass**
die Kreisringsegmente (7) zwischen dem umlaufenden Steg (9) und dem Ringflansch (11) beziehungsweise dem Klemmring (5) in mindestens zwei Gruppen mit zur Rotationsachse (X-X) verschiedenen Kreisbahnen (K1, K2) mit unterschiedlichen Radien zueinander versetzt angeordnet sind.

14. Rad nach einem der Ansprüche 1 bis 13,
**dadurch gekennzeichnet, dass**
zwischen den Zentriernocken (19) und einem Boden der Ausnehmungen (21) in dem umlaufenden Steg (9) und in dem Klemmring (5) beziehungsweise dem Ringflansch (11) ein Spiel vorhanden ist.

15. Rad nach einem der Ansprüche 1 bis 14,
**dadurch gekennzeichnet, dass**
die Kontaktflächen der Kreisringsegmente(7) und die anliegenden Anlageflächen des umlaufenden Steges (9) und des Klemmrings (5) beziehungsweise des Ringflansches (11) senkrecht zur Rotationsachse (X-X) verlaufend ausgebildet sind.

16. Rad nach einem der Ansprüche 1 bis 14,
**dadurch gekennzeichnet, dass**
die Kontaktflächen der Kreisringsegmente (7) und die anliegenden Anlageflächen des umlaufenden Steges (9) und des Klemmrings (5) beziehungsweise des Ringflansches (11) derart ausgebildet sind, dass sie einen Winkel (β) von 45° bis 90°, vorzugsweise 74° mit der Rotationsachse (X-X) einschließen.

17. Rad nach einem der Ansprüche 1 bis 16,
**dadurch gekennzeichnet, dass**
sich ein Kreisringsegment (7) über ein Kreissegment des Rades mit einem Mittelpunktswinkel (γ) von 30° bis 180°, vorzugsweise 90° erstreckt.

18. Rad nach einem der Ansprüche 1 bis 17,
**dadurch gekennzeichnet, dass**
der Abstand der Mittelpunkte zweier Zentriernocken (19) in Umlaufrichtung auf einer Kontaktfläche eines Kreisringsegmentes (7) derart ausgebildet ist, dass die Mittelpunkte der Zentriernocken (19) ein Kreissegment des Rades mit einem Mittelpunktswinkel (α) von 15° bis 90°, vorzugsweise 45° einschließen.

19. Rad nach einem der Ansprüche 1 bis 18,
**dadurch gekennzeichnet, dass**
die sich in axialer Richtung auf unterschiedlichen Kontaktflächen gegenüberliegenden Zentriernocken (19) eines Kreisringsegmentes (7) radial mit unterschiedlichem Abstand zur Rotationsachse (X-X) verlaufen.

20. Rad nach einem der Ansprüche 1 bis 19,
**dadurch gekennzeichnet, dass**
in den Blechsegmenten (17) im Bereich der Zentriernocken (19) mindestens eine Öffnung (29) angeordnet ist.

21. Dämpfungsmittel zur Verwendung in einem Rad nach einem der Ansprüche 1 bis 20,
**gekennzeichnet durch**
die Merkmale des Kreisringsegmentes (7) gemäß einem der Ansprüche 1 bis 20.

22. Radreifen (1) zur Verwendung in einem Rad nach einem der Ansprüche 1 bis 20,
**gekennzeichnet durch**
die Merkmale des Radreifens (1) nach einem der Ansprüche 1 bis 19, wobei der umlaufende Steg (9) des Radreifens geeignet zur Aufnahme der Dämpfungsmittel gemäß Anspruch 21 ausgebildet ist.
